# EUROPEAN PATENT SPECIFICATION

(11) **EP 0 321 106 B1**
(45) Date of publication and mention of the grant of the patent: **28.04.1993**
(21) Application number: 88311111.4
(22) Date of filing: 24.11.1988
(51) Int. Cl.: C07F 9/38

(54) **Process**
Verfahren
Procédé

(30) Priority: 16.12.1987 GB 8729341
(43) Date of publication of application: 21.06.1989
(73) Proprietor: IMPERIAL CHEMICAL INDUSTRIES PLC, London SW1P 3JF (GB)
(72) Inventor: Yelland, Michael, Rossendale Lancashire BB4 2TJ (GB)
(74) Representative: Laird, Alan Hodgson

(56) References cited:
- US-A- 2 606 925
- JOURNAL OF THE AMERICAN CHEMICAL SOCIETY, vol. 77, no. 16 25th August 1955, pages 4262-4263, American Chemical Society; L.D. FREEDMAN et al.: "The catalytic hydrogenation of arylphosphonic acids"
- IDEM
- JOURNAL OF THE AMERICAN CHEMICAL SOCIETY, vol. 75, no. 5, 10th March 1953, pages 1156-1159, American Chemical Society; A.E. BARKDOLL et al.: "Alicyclic diamines. Preparation of Bis-(4-aminocyclohexyl)-methane"
- B E Leach "Applied Industrial Catalysis (1983) vol 2 page 8

## Description

The present invention relates to a process for the production of cycloalkyl phosphorus compounds, particularly cyclohexyl phosphonic acid.

Organic phosphorus compounds have a wide range of uses, for example as plasticisers for vinyl chloride polymers and copolymers, as stabilisers for olefin polymers, as additives during the production of polymers and in agrochemical applications. Phosphonic acids such as cycloalkyl phosphonic acids can be used, inter alia, to increase the molecular weight of pre-formed polyamides (GB 1092845), or to improve the dye affinity of polyamide fibres (FR 1512185) or for the production of organophosphorus-vanadium compounds which can be used as fuel combustion additives, particularly diesel fuel additives (US Patent 3290342) or as a cross-linking additive for acrylic copolymers which contain epoxy groups (US Patent 4241196).

GB 707961 describes the preparation of organic phosphonyl dichlorides by the reaction of an organic chloride which may be, inter alia, a cycloalkyl chloride, with phosphorus trichloride in the presence of anhydrous aluminium chloride followed by controlled hydrolysis. However, it is indicated that if hydrolysis is not controlled and an excess of water is used, the final product is the corresponding phosphonic acid. Whatever degree of hydrolysis is used, hydrogen chloride is formed as a by-product. The hydrogen chloride is a corrosive material under the conditions used and has been found to cause a rapid deterioration of the equipment used with the need for regular replacement of the equipment.

An alternative procedure involves the catalytic hydrogenation of aromatic compounds using a rhodium-on-alumina catalyst (J.American Chemical Society, 77 (1955) pages 4262 and 4263). The procedure described is effected in ethyl alcohol and uses phenylphosphonic acid and the catalyst in essentially equal weight proportions. The yield of cyclohexylphosphonic acid is reported as 86%. However, the proportion of catalyst used is commercially unattractive in view of the high cost of the catalyst. We have found that by using a different catalyst it is possible to achieve a higher yield of the desired cycloalkyl product using a lower proportion of the catalyst.

According to the present invention there is provided a process which comprises hydrogenating a substituted or unsubstituted aryl phosphonic acid in the presence of a liquid medium and 1-10% by weight relative to the aryl phosphonic acid of a heterogenerous catalyst which is a Group VIII metal on carbon.

The substituted or unsubstituted aryl group is typically a phenyl group which may be substituted with at least one hydrocarbyl substituent which is typically an alkyl group containing up to six carbon atoms. Alternatively the substituent may be an amino-group, for example a primary amino group as in 4-aminophenylphosphonic acid. Other substituents may be present but it is desirable that such other substituents are not hydrogenated under the reaction conditions or are not such as to interfere with the hydrogenation. The process of the present invention is conveniently effected using phenylphosphonic acid.

The liquid medium is preferably one in which at least the phosphonic acid product is soluble under the reaction conditions and it is especially preferred that both the product and the reactant are soluble in the liquid medium. The liquid medium is very conveniently water but any other liquid medium in which at least the phosphonic acid product is soluble may be used. However, it is preferred to avoid the use of alcohols since these are liable to react with the phosphonic acid to form esters thus reducing the yield of the desired acid. The use of a liquid medium in which the phosphonic acid product is soluble is preferred to facilitate the removal of the catalyst from the reaction mixture on completion of the reaction.

The heterogeneous catalyst may contain platinum or palladium and we have obtained good results using a ruthenium on carbon catalyst. The catalyst preferably contains at least 1% by weight of the Group VIII metal. Typically the catalyst contains not more than 10% by weight of the Group VIII metal and especially is about 5% by weight. The catalyst is used in an amount which is typically from 1% up to 10% by weight of the weight of the aryl phosphonic acid, especially about 5% by weight of the aryl phosphonic acid.

The hydrogenation is preferably effected at an elevated temperature, for example at least 50°C and typically at least 100°C. A temperature in excess of 200°C is generally not required and the temperature preferably does not exceed 150°C.

The pressure should be such that the liquid medium remains liquid at the reaction temperature. It is generally preferred to use an elevated pressure which is conveniently attained by the addition of the hydrogen used to effect the hydrogenation. The pressure is typically at least 0.2 MNm⁻² absolute and in general does not exceed 10 MNm⁻² absolute. The pressure is preferably in the range from 1 up to 5 MNm⁻² absolute.

The hydrogenation is effected in the substantial, preferably complete, absence of oxygen or any other gas which is liable to form an explosive mixture with hydrogen. The hydrogenation can be effected in the presence of an inert gas but it is convenient to effect the hydrogenation in the presence of an atmosphere which is predominantly, or completely, hydrogen.

During the hydrogenation, the reaction mixture is agitated. To aid the reaction, the hydrogen is added by being bubbled through the reaction mixture. The progress of the reaction can be monitored by measuring the up-take of hydrogen, for example using a Peteric gas flow controller and a Bourdon tube gauge. When the up-take of hydrogen ceases, or has essentially ceased, the hydrogenation is complete. Alternatively, the progress of the reaction may be followed using high performance liquid chromatography to measure the level of aromatic species in the reaction medium. The disappearance of the aromatic species indicates completion of the reaction. Completion of the reaction is dependent on the reaction conditions and typically takes from 1 up to 15 hours.

When the reaction is complete the reaction mixture is allowed to cool and the pressure is reduced. The catalyst is removed from the reaction mixture by any suitable technique, for example by filtration. The reaction product may then be recovered by evaporating off the liquid medium. The solid residue is the desired product and, if desired, can be purified by any suitable technique such as crystallisation. However, using the process of the present invention the product obtained can be of a high degree of purity and further purification is generally unnecessary.

The process of the present invention is more fully described in the following non-limiting example.

### Example

Into a stainless steel autoclave having a capacity of 1 dm³ and fitted with a magnetically operated turbine agitator were placed 500 cm³ of distilled water. 63.2g of phenylphosphonic acid were added to the water and 3.2g of 5% ruthenium on carbon were then added. The autoclave was then sealed and evacuated, and the pressure was released with nitrogen. The autoclave was again evacuated and the pressure released with nitrogen and finally the autoclave was evacuated and pressurised to 0.79 MNm⁻² absolute (100 psi gauge) with hydrogen. The contents of the autoclave were stirred at 1000-1100 r.p.m. and the autoclave and its contents were heated to 120°C. At a temperature of about 95°C, the pressure started to fall and was then increased to 1.48 MNm⁻² absolute (200 psi gauge), and maintained at this pressure until the reaction was judged to be complete.

On attaining a temperature of 120°C, stirring was continued and the temperature was maintained at 120°C whilst passing hydrogen into the autoclave to maintain the pressure at 1.48 MNm⁻² absolute. After eight hours the uptake of hydrogen had essentially ceased and the reaction was then judged to be complete. Heating was terminated and the contents of the autoclave were allowed to cool whilst continuing to stir. When the mixture had cooled to 90-95°C, the excess hydrogen was vented off and the mixture was screened (filtered)to recover the catalyst.

The filtrate was then evaporated to dryness to give 62.3g (95% of theory) of cyclohexylphosphonic acid having a melting point of 166-167°C, which was undepressed when effecting a mixed melting point with an authentic sample of cyclohexylphosphonic acid. The product was also characterised by its infra red spectrum. By high performance liquid chromatography unreacted phenylphosphonic acid could not be detected in the product indicating the Phenylphosphonic acid level to be less than 0.03% by weight. No other by-products could be detected in the cyclohexylphosphonic acid reaction product.

## Claims

1. A process which comprises hydrogenating a substituted or unsubstituted aryl phosphonic acid in the presence of a liquid medium and 1-10% by weight relative to the aryl phosphonic acid of a heterogeneous catalyst which is a Group VIII metal on carbon.

2. A process as claimed in claim 1 in which phenylphosphonic acid or a C₁₋₆-alkylphenylphosphonic is hydrogenated.

3. A process as claimed in either claim 1 or claim 2 wherein the liquid medium is water.

4. A process as claimed in any one of claims 1 to 3 wherein the heterogeneous catalyst is ruthenium on carbon.

5. A process as claimed in any one of claims 1 to 4 wherein the catalyst contains at least 1%, and not more than 10% by weight of the Group VIII metal.

6. A process as claimed in any one of claims 1 to 5 which is effected at a temperature of at least 50°C and not in excess of 200°C.

7. A process as claimed in any one of claims 1 to 6 which is effected at a hydrogen pressure of at least 0.2 MNm⁻² absolute and not exceeding 10 MNm⁻²

## Patentansprüche

1. Verfahren, bei welchem eine substituierte oder unsubstituierte Arylphosphonsäure in Gegenwart eines flüssigen Mediums und 1 bis 10 Gew.%, bezogen auf die Arylphosphonsäure, eines heterogenen Katalysators, bei dem es sich um ein Metall der Gruppe VIII auf Kohlenstoff handelt, hydriert wird.

2. Verfahren nach Anspruch 1, bei welchem Phenylphosphonsäure oder eine C₁₋₆-Alkylphenylphosphonsäure hydriert wird.

3. Verfahren nach Anspruch 1 oder 2, bei welchem das flüssige Medium aus Wasser besteht.

4. Verfahren nach einem der Ansprüche 1 bis 3, bei welchem der heterogene Katalysator aus Ruthenium auf Kohlenstoff besteht.

5. Verfahren nach einem der Ansprüche 1 bis 4, bei welchem der Katalysator mindestens 1 und nicht mehr als 10 Gew.% von dem Metall der Gruppe VIII enthält.

6. Verfahren nach einem der Ansprüche 1 bis 5, welches bei einer Temperatur von mindestens 50 und nicht mehr als 200°C ausgeführt wird.

7. Verfahren nach einem der Ansprüche 1 bis 6, welches bei einem Wasserstoffdruck von mindestens 0,2 und nicht mehr als 10 MNm⁻² absolut ausgeführt wird.

## Revendications

1. Procédé qui comprend l'hydrogénation d'un acide arylphosphonique substitué ou non substitué en présence d'un milieu liquide et de 1 à 10 % en poids, par rapport à l'acide arylphosphonique, d'un catalyseur hétérogène qui est un métal du groupe VIII sur carbone.

2. Procédé suivant la revendication 1, dans lequel l'acide phénylphosphonique ou un acide C₁₋₆ alcoylphénylphosphonique hydrogéné.

3. Procédé suivant la revendication 1 ou 2, dans lequel le milieu liquide est l'eau.

4. Procédé suivant l'une des quelconque revendications 1 à 3, dans lequel le catalyseur hétérogène est le ruthénium sur carbone.

5. Procédé suivant l'une des quelconque revendications 1 à 4, dans lequel le catalyseur contient au moins 1 et pas plus de 10 % en poids du métal du groupe VIII.

6. Procédé suivant l'une des quelconque revendications 1 à 5, qui est exécuté à une température d'au moins 50°C et non supérieure à 200°C.

7. Procédé suivant l'une des quelconque revendications 1 à 6, qui est exécuté sous une pression d'hydrogène d'au moins 0,2 MNm⁻² absolu et n'excédant pas 10 MNm⁻² absolus.
